# EUROPEAN PATENT SPECIFICATION

(11) **EP 0 450 785 B1**
(45) Date of publication and mention of the grant of the patent: **15.05.1996**
(21) Application number: 91302276.0
(22) Date of filing: 18.03.1991
(51) Int. Cl.: C01B 21/04, C01B 13/02

(54) **Air separator**
Lufttrennvorrichtung
Séparateur d'air

(30) Priority: 23.03.1990 US 498078
(43) Date of publication of application: 09.10.1991
(73) Proprietor: THE BOC GROUP, INC., Murray Hill, New Jersey 07974 (US)
(72) Inventor: Gmelin, Robert C., Cranford, NJ 07016 (US); LaCava, Alberto I., South Plainfield, NJ 07080 (US)
(74) Representative: Gough, Peter

(56) References cited:
- EP-A- 0 132 756
- EP-A- 0 284 448
- GB-A- 2 042 365
- US-A- 3 086 339
- US-A- 4 892 566
- AIChE JOURNAL, vol. 33, no. 4, April 1987; H.-S. SHIN et al., pp. 654-662,"Pressure Swing Adsorption: A Theoretical Study of Diffusion-Induced Separations"

## Description

This invention relates to an air separation system that is used to obtain a relatively pure stream of nitrogen from a feed stream of air under pressure in a pressure swing adsorption cycle.

There are, today, many methods and corresponding apparatus for carrying out the process of pressure swing adsorption or PSA. In the use of PSA technology, a stream of gas, normally air, is separated into one of its components by passing that air over a bed of adsorptive material.

Most systems include the use of two or more adsorption beds or columns and which are taken through various steps of pressurisation, adsorption, depressurisation and regeneration, in many sequences of steps. Such systems can be fairly complex in construction and operation and the associated timing steps, valve operation and sequencing can be considerably costly and difficult to construct. Typical examples of such systems include those shown and described in U.S. Patent 3,086,339 Skarstom showing a three bed system. U.S. Patent 3,891,411 with a two bed system and recently issued U.S. Patent 4,892,566, Bansel et al utilising a single bed system. Separation of nitrogen from air is also disclosed in the AIChE Journal, April 1987, Vol. 33, No. 4, pages 654-662.

US-A-4 892 566, EP-A-0 132 756, US-A-3 086 339, EP-A-0 284 and GB-A-2 042 365 disclose a number of the features listed in the pre-characterising portion of claims 1 and 8 of the present application.

It is an aim of the present invention to provide a low cost relatively simple air separation system which produces a nitrogen product stream from a feed stream of air under pressure and which product stream may include less than 2% oxygen.

According to a first aspect of the present invention, there is provided a process for producing a nitrogen enriched product from a stream of air in an adsorption bed having an inlet and an outlet, said bed comprising activated kinetic zeolite characterised by the steps of:
providing the kinetic zeolite in the form of crushed 4A kinetic zeolite having a particle size of about 10 to 40 mesh;
introducing air at a pressure of about 274 KPa (20 psig) to about 1.370 MPa (100 psig) into said bed through said inlet for a period of about 4 to 15 seconds whilst withdrawing nitrogen enriched product from said bed through said outlet;
venting said bed through said inlet for a period of between 4 to 15 seconds whilst blocking the flow of air to the bed and preventing nitrogen from reverse flowing to the bed through the outlet, and
repeating steps (b) and (c).

According to another aspect of the present invention there is provided an apparatus for producing a nitrogen rich product stream from a feed stream of pressurised air comprising:
an adsorption bed containing kinetic zeolite, said adsorption in bed having an inlet and an outlet and adapted to separate oxygen from a feed stream of air of a predetermined pressure passing through the adsorption bed from said inlet to said outlet to produce a stream of nitrogen at the outlet;
valve means located in the flow of nitrogen from aid outlet to prevent the return flow of nitrogen towards said outlet; and
two position valve means in the flow of feed stream of air upstream of said inlet, said two position valve means having a first position where the feed stream of air passes through said two position valve means to said inlet and a second position wherein said feed stream of air is blocked and said inlet is vented to atmosphere through said two position valve means; and
timer means adapted to move said two position valve means at predetermined time intervals between said first and said second positions to alternatively produce the nitrogen stream from said outlet and vent the inlet to atmosphere;
characterised in that the kinetic zeolite comprises crushed 4A kinetic zeolite having a particle size of about 10 to 40 mesh.

The apparatus comprises a single adsorption column containing crushed 4A kinetic zeolite sieve material. In the context of this disclosure, a kinetic zeolite is one that performs a separation by discriminating between components due to the difference of adsorption rates of each component. The intrinsic mechanism of such discrimination could be pore diffusivity, surface diffusivity, crystallite diffusivity, or surface adsorption kinetics. The zeolite covered in this disclosure adsorbs N₂ with a half time in the order of ten (10) seconds. Oxygen is adsorbed at a much faster rate.

The single adsorption column is charged with the air at a pressure in excess of 274 KPa (20 psig) through a three way solenoid valve. The valve itself is a readily commercially available valve from a number of sources. A simple solid state electronic timer controls the valve position between a first position where the feed stream is delivered through the valve to the inlet of a adsorption column and a second position where the feed stream is blocked and the valve vents the inlet side of the adsorption column to atmosphere. A check valve is also provided in the outlet line from the adsorption column.

By the use of the molecular sieve material, an extremely short duty cycle can be employed to deliver alternatively a nitrogen product stream from pressurised air passing through the adsorption column and to back flow the column to depressurise the same through its inlet.

All of the components of the present air separation system including the zeolite sieve material can be readily purchased from various commercial sources. Accordingly, a relatively compact air separator can be assembled and operated as a low cost, simple operation.

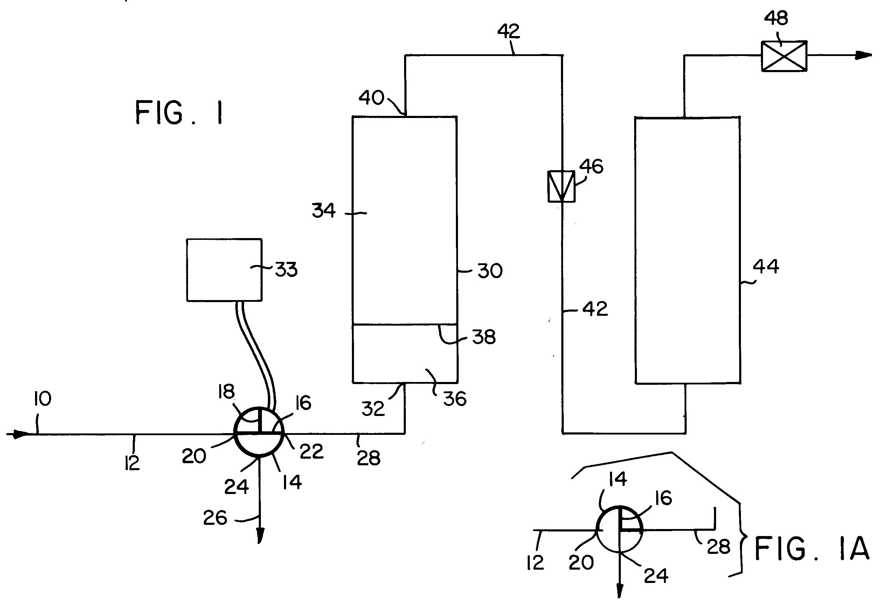

An embodiment of the invention will now be described by way of example with reference to the Figures of the accompanying diagrammatic drawings in which:-
Figure 1 is a schematic view of the overall process and equipment used in carrying out the subject invention; and
Figure 1A is a schematic view of a portion of the Figure 1 equipment with its solenoid valve in the alternate position.

Referring now to Figure 1, there is shown a schematic of the process and apparatus for carrying out air separation by means of the present invention.

As shown in Figure 1, an inlet conduit 12 has an end 10 which receives the feed stream air. The air is under a predetermined pressure of between about 274 KPa (20 psig) to about 1.37 MPa (100 psig) and preferably at a pressure of about 822 KPa (60 psig). Due to the range of pressures, conduit 12 may be of relatively inexpensive polyvinyl chloride (PVC) pipe having a rupture pressure rating of at least 2.74 MPa (200 psig).

A three way solenoid valve 14 is provided at the downstream end of conduit 12 and has a through passage 16 and a radial passage 18 normal to the through passage 16. Solenoid valve 14 is electrically operated between two positions, the first of which is depicted in Figure 1 and the second of which is depicted in Figure 1A, the purpose of which will be later explained.

Various, if not many, commercially available three way solenoid valves may be used, however, one typical valve is the Humphrey 125E1 solenoid valve operating on 240 volts AC and, for purposes of this description, its ports will be referred to as inlet port 20, outlet port 22 and vent port 24. As may be seen, the inlet conduit 12 is connected to inlet port 20 of solenoid valve 14 while vent port 24 is connected to a vent conduit 26 that is open at its end. The third port, outlet port 22 is connected to a further conduit 28 that joins that port to the adsorption column 30 by means of a column inlet 32.

An electronic timer 33 is used to control the position and sequence timing between the two positions of solenoid valve 14. The electronic timer 33 again, can be one of many commercially available timers, one that has been found suitable is a NCC Q6F-00060-321 timer available from National Controls Company.

Depending upon the source of pressurised feed air, a further tank may be employed upstream of the solenoid valve 14 to act as a reservoir to smooth out pressure fluctuations in the feed air supply and to stabilise the pressure of the feed stream. That tank is not shown, however, a conventional commercially available reservoir tank may be used.

The adsorption column 30 is a standard column and, as will be shown in the example, a compact air separation system can use an adsorption column 30 having a capacity of about one liter. Within the adsorption column 30 is provided the sieve material 34.

The sieve material is zeolite 4A available from The Union Carbide Company after being crushed to 10-40 mesh size and thermally treated at 350°C.

In the preferred embodiment, the adsorption column 30 is divided into two sections with about 90% containing the kinetic zeolite 34 with about 10% containing alumina 36 directly adjacent the column inlet 32. The alumina 36 is utilised to dry the incoming feed air in order to prevent moisture from contaminating the kinetic zeolite 34. A felt layer 38, in the order of 0.635mm (0.025) inches can be used to separate the kinetic zeolite 34 from the alumina 36. Alternatively, a wire screen or other separation may be used to isolate the alumina from the zeolite while allowing the flow of gas.

Obviously, while for compactness, it is preferred to include the alumina 36 within the adsorption column 30, its function is merely to dry the feed air and therefore other means of drying the air may be used, such as a separate dryer further upstream of the adsorption column 30 or there may be locations or supplies of pressurised air that is already sufficiently dry so as not to affect the zeolite.

A column outlet 40 is provided in adsorption column 30 and connects to outlet conduit 42 to a buffer or product reservoir 44 and again, the use of the product reservoir 44 is merely to smooth out surges of flow and/or pressure fluctuations to provide a product stream of relatively constant flow and pressure.

A check valve 46 is provided in outlet conduit 42 downstream from column outlet 40 and prevents the flow of gas in a reverse direction, that is, toward the column outlet 40.

As a further component, a pressure regulator or valve 48 is used downstream of the product reservoir 44 to provide a gas to the end user at the desired conditions.

The operation of the compact air separation unit is thus as follows. The adsorption column 30 is pressurised by the feed air passing through inlet conduit 12 via end 10. The electronic timer 33 has positioned the solenoid valve 14 in its position shown in Figure 1 such that the feed air passes directly through solenoid valve 14 by through passage 16 and enters and passes through the adsorption column 30 via its column inlet 32 and column outlet 40 respectively. The pressure of the air feed may be within the range of from about 274 KPa (20 psig) to about 1.37 MPa (100 psig) with a preferred pressure of about 822 KPa (60 psig).

During passage through adsorption column 30, the oxygen is, of course, separated from the air stream and the product entering outlet conduit 42 is almost entirely nitrogen. That product nitrogen thereupon passes through the check valve 46 and accumulates within product reservoir 44 before being transported to its end use through regulator 48.

After a predetermined extremely short cycle of the feed air passing through adsorption column 30, the electronic timer 33 signals solenoid valve 14 thereby changing its position to that shown in Figure 1A. In the Figure 1A position of the solenoid valve 14, the feed stream is cut off since the inlet conduit dead ends at inlet 20 of solenoid valve 14. Meanwhile, the residual pressure and feed air within adsorption column 30 is vented to atmosphere since the outlet 22 of solenoid valve 14 is open to the vent conduit 26 through a section of through passage 16. Since check valve 46 prevents product nitrogen contained within product reservoir 44 from flowing in a reverse direction back into the adsorption column 30, that adsorption column 30 undergoes depressurisation and a reverse flow of feed air remaining therein progresses toward and out of vent conduit 26, thus returning adsorption column 30 to atmosphere pressure.

At the end of a second predetermined time period, electronic timer 33 signals solenoid valve 14 and solenoid valve 14 returns to its position depicted in Figure 1 to again commence the introduction of feed air into the adsorption column to produce nitrogen product stream.

The timing cycle is relatively critical in operation of the present air separation system in that the product cycle, that is where the solenoid valve 14 is in Figure 1 position, and the vent cycle, where the solenoid valve 14 is in the Figure 1A position, must be relatively rapid.

Preferably the product cycle time is from about 4 seconds to 15 seconds, since the continued product cycle for time in excess of about 15 seconds results in oxygen leaving the adsorption column into the outlet conduit 42. The preferred time for the product cycle is about 10 seconds. The vent cycle is also relatively rapid and preferably is from 4 seconds to 15 seconds, however, it is obviously less critical than the product cycle since its function is to vent the adsorption column 30 and create a reverse flow of air and partially separated air out the vent conduit 26.

It is preferred, however, for cycle efficiency that the vent cycle be about the same time as the product cycle time, that is from 4 to 15 seconds and preferably about 10 seconds.

The simplicity and compactness of the separation system is exemplified by the lack of need for a separate pressurisation cycle or purge cycle, typically used in various PSA systems.

The product cycle time is so rapid that the pressure builds up almost immediately merely by the pressure of the feed air and depressurisation is also rapidly accomplished.

### EXAMPLES

In the following examples, examples 1 and 2 are illustrative of presently known products whilst example 3 is illustrative of a zeolite in the form of the present invention.

### Example 1

This example illustrates the cycle times and inlet pressures used in Applicants economical air separator. Inexpensive PVC piping was used throughout. The adsorption column was a one liter size and filled with about 585 grams of RS-10 kinetic zeolite or approximately .85 liters and the remaining volume filled with alumina.

The runs obtained the data in the following table.

**TABLE 1**

| Inlet Press (PSIG) | Product Flow (liters/min) | Cycle Time Product/Vent (seconds) | O₂ in Product % |
|---|---|---|---|
| 75 | 1.1 1/m | 10/10 | 0.55% |
| 60 | 0.9 | 10/10 | .5% |
| 50 | 0.8 | 10/10 | .46% |
| 45 | 0.7 | 10/10 | .44% |
| 40 | 0.5 | 10/10 | .44% |
| 35 | 0.4 | 10/10 | .46% |
| 30 | 0.3 | 10/10 | .52% |
| 30 | 0.3 | 8/8 | .46% |
| 35 | 0.4 | 7/7 | .4% |
| 40 | 0.5 | 7/7 | .4% |
| 50 | 0.8 | 7/7 | .44% |
| 60 | 0.9 | 7/7 | .47% |
| 60 | 0.9 | 5/5 | .60% |
| 80 | 1.1 | 8/8 | .64% |
| 60 | 0.5 | 12/12 | .84% |

The preferred results were obtained with cycle times of 7 seconds product cycle and 7 seconds vent cycle and an inlet pressure of about 822 KPa (60 psig) and product flow of 0.9 liters per minute. The product included .47% of oxygen.

### Example 2

Equipment as in Example 1. The one liter bed was filled with 0.85 liters of Union Carbide 4A Molecular Sieve. The remaining volume was filled with Alumina.

The results of the runs are given below in Table 2.

**TABLE 2**

| Inlet Press (PSIG) | Product Flow (liters/min) | Cycle Time Product/Vent (seconds) | O₂ in Product % |
|---|---|---|---|
| 70 | 1.75 | 10/10 | 0.95 |
| 70 | 1.80 | 10/10 | 1.0 |
| 70 | 2.00 | 10/10 | 1.3 |
| 70 | 2.13 | 10/10 | 1.5 |
| 70 | 2.40 | 10/10 | 1.65 |

### Example 3

Equipment as in Example 1. The bed is filled with 0.85 liters of a zeolite prepared by crushing 4A molecular sieve pellets to 20-40 mesh and by regenerating at 350°C overnight under N₂ stream. The remaining volume of the bed is filled with alumina. The results of the runs are given below in Table 3.

**TABLE 3**

| Inlet Press (PSIG) | Product Flow (liters/min) | Cycle Time Product/Vent (seconds) | O₂ in Product % |
|---|---|---|---|
| 70 | 2.75 | 10/10 | 1.2 |
| 70 | 2.43 | 10/10 | 1.0 |
| 70 | 1.8 | 10/10 | 0.5 |
| 70 | 1.05 | 10/10 | 0.2 |
| 70 | 0.68 | 10/10 | 0.1 |

The preferred range of results included cycle times from 5 seconds product/vent cycles to 12 seconds product/vent cycles and inlet pressures between about 411 KPa (30 psig) to about 1.096 MPa (80 psig).

Thus, the present air separation unit provides a relatively low cost, simple construction, yet obtains a useful nitrogen product stream of sufficient purity for various end uses. The unit is compact in size and can even be wall mounted on site, is relatively trouble free with few components and minimum maintenance.

## Claims

1. A process for producing a nitrogen enriched product from a stream of air in an adsorption bed (30) having an inlet (32) and an outlet (40), said bed comprising activated kinetic zeolite characterised by the steps of:
(a) providing the kinetic zeolite in the form of crushed 4A kinetic zeolite having a particle size of about 10 to 40 mesh;
(b) introducing air at a pressure of about 274 KPa (20 psig) to about 1.370 MPa (100 psig) into said bed (30) through said inlet (32) for a period of between 4 to 15 seconds whilst withdrawing nitrogen enriched product from said bed (30) through said outlet (40);
(c) venting said bed (30) through said inlet (32) for a period of between 4 and 15 seconds whilst blocking the flow of air to the bed (30) and preventing nitrogen from reverse flowing to the bed (30) through the outlet (40), and
(d) repeating steps (b) and (c).

2. The process of Claim 1, characterised in that the predetermined pressure of the feed stream is from about 411 KPa (30 psig) to about 1.096 MPa (80 psig).

3. The process of Claim 2, characterised in that the predetermined pressure of the feed stream is about 822 KPa (60 psig).

4. The process of Claims 1, 2 or 3, characterised in that the step of periodically changing the position of the two position valve 14 comprises allowing said two position valve to be in its first position for a period of between 4 and 15 seconds and in its second position for a period of between about 4 and 15 seconds.

5. The process of Claim 4, characterised in that said step of periodically changing the position of the two position valve 14 comprises allowing said two position valve 14 to be in its first and second positions for the same time period.

6. The process of Claim 5, characterised in that said time period is about 10 seconds.

7. The process as claimed in any one of Claims 1 to 6, characterised in that said adsorption column 30 additionally contains a water adsorbent material 36 at or near its inlet 32.

8. An apparatus for producing a nitrogen rich product stream from a feed stream of pressurised air comprising:
an adsorption bed (30) containing kinetic zeolite (34), said adsorption in bed (30) having an inlet (32) and an outlet (40) and adapted to separate oxygen from a feed stream of air of a predetermined pressure passing through the adsorption bed (30) from said inlet (32) to said outlet (40) to produce a stream of nitrogen at the outlet (40);
valve means (46) located in the flow of nitrogen from aid outlet (40) to prevent the return flow of nitrogen towards said outlet (40); and
two position valve means (14) in the flow of feed stream of air upstream of said inlet (32), said two position valve means (14) having a first position where the feed stream of air passes through said two position valve means (14) to said inlet (32) and a second position wherein said feed stream of air is blocked and said inlet (32) is vented to atmosphere through said two position valve means (14); and
timer means (33) adapted to move said two position valve means (14) at predetermined time intervals between said first and said second positions to alternatively produce the nitrogen stream from said outlet (40) and vent the inlet (32) to atmosphere;
characterised in that the kinetic zeolite comprises crushed 4A kinetic zeolite having a particle size of about 10 to 40 mesh.

9. An apparatus as claimed in Claim 8, characterised in that said timer means 33 retains said two position valve means 14 in its first position for about 4 to 15 seconds and in its second position for 4 to 15 seconds.

10. An apparatus as claimed in Claim 8 or 9, characterised in that said two position valve means 14 comprises a solenoid valve and said valve means 46 in the flow of nitrogen from said adsorption column outlet 40 comprises a check valve.

11. An apparatus as claimed in any one of Claims 8 to 10, characterised in that said adsorption column 30 also contains a water adsorbent material 36 at or near its inlet 32.

12. An apparatus as claimed in Claim 11, characterised in that said water adsorbent material is alumina which is separated from the kinetic zeolite 34 by a mesh screening material.

## Patentansprüche

1. Ein Verfahren zur Herstellung eines stickstoffangereicherten Produktes aus einem Luftstrom in einem Adsorptionsbett (30) mit einem Einlaß (32) und einem Auslaß (40), wobei das Bett aktiviertes kinetisches Zeolith umfaßt,
gekennzeichnet durch die Schritte, daß:
(a) das kinetische Zeolith in der Form von gebrochenem 4A kinetischem Zeolith mit einer Partikelgröße von ungefähr 10 bis 40 Maschenweite vorgesehen wird;
(b) Luft bei einem Druck von ungefähr 274 KPa (20 psig) bis ungefähr 1370 MPa (100 psig) in das Bett (30) durch den Einlaß (32) für eine Periode zwischen 4 und 15 Sekunden eingeleitet wird, während stickstoffangereichertes Produkt aus dem Bett (30) durch den Auslaß (40) entzogen wird;
(c) das Bett (30) durch den Einlaß (32) für eine Periode zwischen 4 und 15 Sekunden entlüftet wird, während der Luftfluß zu dem Bett (30) blockiert und verhindert wird, daß Stickstoff zu dem Bett (30) durch den Einlaß (32) zurückfließt, und
(d) die Schritte (b) und (c) wiederholt werden.

2. Das Verfahren von Anspruch 1,
dadurch gekennzeichnet, daß der vorbestimmte Druck des Speisestroms ungefähr 411 KPa (30 psig) bis ungefähr 1096 MPa (80 psig) beträgt.

3. Das Verfahren von Anspruch 2,
dadurch gekennzeichnet, daß der vorbestimmte Druck des Speisestroms ungefähr 822 KPa (60 psig) beträgt.

4. Das Verfahren der Ansprüche 1, 2 oder 3,
dadurch gekennzeichnet, daß der Schritt der periodischen Änderung der Position des Zweipositionsventils (14) umfaßt, daß erlaubt wird, daß das Zweipositionsventil (14) seine ersten Position für eine Periode zwischen 4 und 15 Sekunden und seine zweiten Position für eine Periode zwischen 4 und 15 Sekunden einnimmt.

5. Das Verfahren von Anspruch 4,
dadurch gekennzeichnet, daß der Schritt der periodischen Änderung der Position des Zweipositionsventils (14) umfaßt, daß erlaubt wird, daß das Zweipositionsventil (14) seine ersten und zweiten Positionen für die gleiche Zeitperiode einnimmt.

6. Das Verfahren von Anspruch 5,
dadurch gekennzeichnet, daß die Zeitperiode ungefähr 10 Sekunden beträgt.

7. Das Verfahren wie in einem der Ansprüche 1 bis 6
beansprucht, dadurch gekennzeichnet, daß die Adsorptionssäule (30) zusätzlich ein wasseradsorbierendes Material (36) bei oder nahe an seinem Einlaß (32) enthält.

8. Eine Vorrichtung zur Herstellung eines stickstoffreichen Produktstroms aus einem Druckluftspeisestrom mit:
einem Adsorptionsbett (30), das kinetisches Zeolith (34) enthält, wobei das Adsorptionsbett (30) einen Einlaß (32) und einen Auslaß (40) aufweist und ausgelegt ist,
Sauerstoff von einem Luftspeisestrom eines vorbestimmten Drucks, der durch das Adsorptionsbett (30) von dem Einlaß (32) zu dem Auslaß (40) tritt, zu trennen, um einen Stickstoffstrom an dem Auslaß (40) zu erzeugen;
Ventilmitteln (46), die in dem Stickstoffluß von dem Auslaß (40) angeordnet sind, um den Rückfluß von Stickstoff auf den Auslaß (40) zu zu verhindern; und
Zweipositionsventilmitteln (14) in dem Luftspeisestromfluß stromaufwärts des Einlasses (32), wobei die Zweipositionsventilmittel (14) eine erste Position, wo der Luftspeisestrom durch die Zweipositionsventilmittel (14) zu dem Einlaß (32) tritt, und eine zweite Position aufweist, worin der Luftspeisestrom blockiert ist und der Einlaß (32) zur Atmosphäre entlüftet ist durch die Zweipositionsventilmittel (14); und
Zeitabstimmermitteln (33), die ausgelegt sind, die Zweipositionsventilmittel (14) in vorbestimmten Zeitintervallen zwischen den ersten und zweiten Positionen zu bewegen, um alternativ den Stickstoffstrom von dem Auslaß (40) zu erzeugen und den Einlaß (32) zur Atmosphäre zu entlüften;
dadurch gekennzeichnet, daß das kinetische Zeolith gebrochenes 4A kinetisches Zeolith mit einer Partikelgröße von ungefähr 10 bis 40 Maschenweite umfaßt.

9. Eine Vorrichtung wie in Anspruch 8 beansprucht, dadurch gekennzeichnet, daß das Zeitabstimmermittel (33) das Zweipositionsventilmittel (14) in seiner ersten Position für ungefähr 4 bis 15 Sekunden und in seiner zweiten Position für 4 bis 15 Sekunden hält.

10. Eine Vorrichtung wie in Anspruch 8 oder 9 beansprucht, dadurch gekennzeichnet, daß das Zweipositionsventilmittel (14) ein Solenoidventil und das Ventilmittel (46) in dem Stickstoffluß aus dem Adsorptionssäulenauslaß (40) ein Rückschlagventil umfaßt.

11. Eine Vorrichtung wie in einem der Ansprüche 8 bis 10 beansprucht, dadurch gekennzeichnet, daß die Adsorptionssäule (30) auch ein wasseradsorbierendes Material (36) bei oder nahe an ihrem Einlaß (32) enthält.

12. Eine Vorrichtung wie in Anspruch 11 beansprucht, dadurch gekennzeichnet, daß das wasseradsorbierende Material Aluminiumoxid ist, welches von dem kinetischen Zeolith (34) durch ein Maschensiebungsmaterial getrennt ist.

## Revendications

1. Procédé de fabrication d'un produit enrichi en azote à partir d'un courant d'air dans un lit (30) d'adsorption ayant une entrée (32) et une sortie (40), le lit comprenant une zéolite cinétique activée, caractérisé par les étapes suivantes :
(a) la disposition de la zéolite cinétique sous forme d'une zéolite cinétique 4A broyée ayant une dimension particulaire d'environ 0,42 à 2 mm (10 à 40 mesh),
(b) l'introduction d'air à une pression d'environ 274 kPa (20 psig) à environ 1,370 MPa (100 psig) dans le lit (30) par ladite entrée (32) pendant une période de 4 à 15 s avec extraction du produit enrichi en azote du lit (30) par la sortie (40),
(c) l'évacuation du lit (30) par l'entrée (32) pendant une période comprise entre 4 et 15 s avec arrêt de la circulation d'air vers le lit (30) et interdiction de la circulation en sens inverse de l'azote vers le lit (30) par l'entrée (32), et
(d) la répétition des étapes (b) et (c).

2. Procédé selon la revendication 1, caractérisé en ce que la pression prédéterminée du courant d'alimentation est comprise entre 411 kPa (30 psig) et environ 1,096 MPa (80 psig).

3. Procédé selon la revendication 2, caractérisé en ce que la pression prédéterminée du courant d'alimentation est d'environ 822 kPa (60 psig).

4. Procédé selon la revendication 1, 2 ou 3, caractérisé en ce que l'étape de changement périodique de la position d'une soupape (14) à deux positions comprend la mise de la soupape à deux positions dans sa première position pendant une période comprise entre 4 et 15 s et dans sa seconde position pendant une période comprise entre environ 4 et 15 s.

5. Procédé selon la revendication 4, caractérisé en ce que l'étape de changement périodique de la position de la soupape à deux positions (14) comprend la mise de la soupape à deux positions (14) dans sa première et dans sa seconde position pendant des périodes identiques.

6. Procédé selon la revendication 5, caractérisé en ce que la période est d'environ 10 s.

7. Procédé selon l'une quelconque des revendications 1 à 6, caractérisé en ce que la colonne (30) d'adsorption contient en outre un matériau (36) adsorbant l'eau à l'entrée (32) ou près de cette entrée.

8. Appareil de fabrication d'un courant produit riche en azote à partir d'un courant d'alimentation d'air comprimé, comprenant :
un lit d'adsorption (30) contenant une zéolite cinétique (34), le lit d'adsorption (30) ayant une entrée (32) et une sortie (40) et étant destiné à séparer l'oxygène d'un courant d'alimentation en oxygène à une pression prédéterminée lors de la circulation dans le lit d'adsorption (30) de l'entrée (32) à la sortie (40) avec production d'un courant d'azote à la sortie (40),
un dispositif à soupape (46) placé dans le courant d'azote provenant de la sortie (40) et destiné à empêcher le retour de l'azote vers la sortie (40), et
un dispositif (14) à soupape à deux positions placé dans le courant d'alimentation en air en amont de l'entrée (32), ce dispositif (14) à soupape à deux positions ayant une première position dans laquelle le courant d'alimentation en air passe par le dispositif (14) à soupape à deux positions vers l'entrée (32) et une seconde position dans laquelle le courant d'alimentation en air est arrêté et l'entrée (32) est reliée à l'atmosphère par le dispositif (14) à soupape à deux positions, et
un dispositif de minutage (33) destiné à déplacer le dispositif à soupape à deux positions (14) à des intervalles de temps prédéterminés entre la première et la seconde position afin que le courant d'azote soit produit à la sortie (40) et l'entrée (32) soit reliée à l'atmosphère en alternance,
caractérisé en ce que la zéolite cinétique est une zéolite cinétique 4A broyée dont la dimension particulaire est d'environ 0,42 à 2 mm (10 à 40 mesh).

9. Appareil selon la revendication 8, caractérisé en ce que le dispositif de minutage (33) maintient le dispositif à soupape à deux positions (14) dans la première position pendant 4 à 15 s et dans la seconde position pendant 4 à 15 s.

10. Appareil selon la revendication 8 ou 9, caractérisé en ce que le dispositif à soupape à deux positions (14) comporte une électrovanne, et le dispositif à soupape (46) placé dans le courant d'azote provenant de la sortie de la colonne d'adsorption (40) comprend un clapet de retenue.

11. Appareil selon l'une quelconque des revendications 8 à 10, caractérisé en ce que la colonne d'adsorption (30) contient aussi une matière adsorbant l'eau (36) placée à son entrée (32) ou à proximité.

12. Appareil selon la revendication 11, caractérisé en ce que la matière adsorbant l'eau est de l'alumine qui est séparée de la zéolite cinétique (34) par une matière de retenue sous forme d'une grille.
